(19) **Europäisches Patentamt / European Patent Office / Office européen des brevets**

(11) **EP 2 768 221 B1**

(12) **EUROPEAN PATENT SPECIFICATION**

(45) Date of publication and mention of the grant of the patent:
**06.01.2021 Bulletin 2021/01**

(21) Application number: **12841449.7**

(22) Date of filing: **18.10.2012**

(51) Int Cl.:
**H04N 19/13** (2014.01)      **H04N 19/192** (2014.01)
**H04N 19/587** (2014.01)     **H04N 19/117** (2014.01)
**H04N 19/15** (2014.01)       **H04N 19/463** (2014.01)
**H04N 19/182** (2014.01)     **H04N 19/523** (2014.01)

(86) International application number:
**PCT/JP2012/076929**

(87) International publication number:
**WO 2013/058311 (25.04.2013 Gazette 2013/17)**

(54) **VIDEO CODING METHOD, DEVICE AND PROGRAM FOR INTERPOLATION FILTER COEFFICIENTS.**

VIDEOCODIERUNGSVERFAHREN, VORRICHTUNG UND PROGRAMM FÜR INTERPOLATIONSFILTERKOEFFIZIENTEN.

DISPOSITIF, PROCÉDÉ ET PROGRAMME DE CODAGE VIDÉO PUR COEFFICIENTS DE FILTRES D'INTERPOLATION.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2011 JP 2011228553**

(43) Date of publication of application:
**20.08.2014 Bulletin 2014/34**

(73) Proprietor: **Nippon Telegraph and Telephone Corporation**
**Tokyo 100-8116 (JP)**

(72) Inventors:
- **MATSUO Shohei**
  **Musashino-shi**
  **Tokyo 180-8585 (JP)**
- **BANDOH Yukihiro**
  **Musashino-shi**
  **Tokyo 180-8585 (JP)**
- **ITO Takeshi**
  **Musashino-shi**
  **Tokyo 180-8585 (JP)**
- **TAKAMURA Seishi**
  **Musashino-shi**
  **Tokyo 180-8585 (JP)**
- **SHIMIZU Atsushi**
  **Musashino-shi**
  **Tokyo 180-8585 (JP)**
- **JOZAWA Hirohisa**
  **Musashino-shi**
  **Tokyo 180-8585 (JP)**

(74) Representative: **Ahner, Philippe et al**
**BREVALEX**
**95, rue d'Amsterdam**
**75378 Paris Cedex 8 (FR)**

(56) References cited:
**WO-A1-2011/083666     US-A1- 2009 022 220**
**US-A1- 2010 284 461     US-A1- 2011 188 769**
**US-A1- 2012 281 749**

- **LAI P ET AL: "Loop filter with directional similarity mapping (DSM)", 95. MPEG MEETING; 24-1-2011 - 28-1-2011; DAEGU; (MOTION PICTURE EXPERT GROUP OR ISO/IEC JTC1/SC29/WG11),, no. m18981, 25 January 2011 (2011-01-25), XP030047550,**
- **BUDAGAVI (TI) M: "AHG6: Simplification of ALF filter coefficients coding", 9. JCT-VC MEETING; 100. MPEG MEETING; 27-4-2012 - 7-5-2012; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-I0346, 17 April 2012 (2012-04-17), XP030112109,**

EP 2 768 221 B1

- MATSUO,S. ET AL.: 'CE3: Modifications of region-based adaptive interpolation filter' JOINT COLLABORATIVE TEAM ON VIDEO CODING (JCT-VC)OF ITU-T SG16 WP3 AND ISO/IEC JTC1/SC29/WG11 JCTVC-F048 01 July 2011, XP030009071

- XUN GUO ET AL: "Localized multiple adaptive interpolation filters with single-pass encoding", VISUAL COMMUNICATIONS AND IMAGE PROCESSING; 11-7-2010 - 14-7-2010; HUANG SHAN, AN HUI, CHINA,, 11 July 2010 (2010-07-11), XP030082200,

**Description**

TECHNICAL FIELD

The present invention relates to video encoding technology which achieves enhancement in the performance of an interpolation filter in video coding and enhances coding efficiency.

BACKGROUND ART

In video coding, in inter-frame prediction (motion compensation) encoding in which prediction is executed between different frames, a motion vector with which prediction error energy is minimized is obtained with reference to a previously decoded frame, and a prediction error signal (also referred to as a residual signal) thereof is subjected to orthogonal transform. Quantization is then applied and binary data, i.e., a bit stream, is ultimately obtained through entropy encoding. Reduction in the prediction error energy is indispensable in order to increase coding efficiency, and a predictive scheme having high predictive precision is desired.

A great number of tools for increasing precision of inter-frame prediction are introduced in a video coding standard scheme. 1/2-precision pixels are interpolated from integer-precision pixels of a reference frame using a 6-tap filter, and 1/4-precision pixels are generated through linear interpolation using these pixels. Accordingly, prediction becomes more precise for motion of decimal precision. The present tool is called 1/4-pixel precision prediction.

International standardization organizations ISO/IEC "MPEG" (International Organization for Standardization/International Electrotechnical Commission "Moving Picture Experts Group") and ITU-T "VCEG" (International Telecommunication Union-Telecommunication Standardization Sector "Video Coding Experts Group") have jointly established an investigation team (Joint Collaborative Team for Video Coding (JCT-VC)) in pursuit of the development of a next-generation video coding standard scheme having higher coding efficiency than that of H.264/AVC. The next-generation standard scheme is called a high efficiency video coding (HEVC) scheme, and various new coding technologies are currently being collected from countries of the world and discussed at meetings of JCT-VC.

Among them, particularly, a great number of proposals related to inter-frame prediction (motion compensation) have been made, tools for increasing interpolation precision of a decimal-precision pixel have been proposed for HEVC reference software (HEVC test Model: HM), and a DCT-based interpolation filter (DCT-IF) which derives interpolation filter coefficients from a basis of DCT (Discrete Cosine Transform) coefficients has a high effect and is adopted as a candidate for an interpolation filter of HM. An interpolation filter which adaptively changes interpolation filter coefficients on a frame-by-frame basis is also proposed in order to further increase interpolation precision and is called an adaptive interpolation filter (AIF). The adaptive interpolation filter has a high effect in terms of enhancement in coding efficiency and is also adopted by reference software targeted for next-generation video coding (Key Technical Area: KTA) mainly produced by VCEG. Improvement in the performance of interpolation filters is a highly anticipated area because a contribution to improvement in coding efficiency is high.

Conventional interpolation filters will be described in greater detail.

[Fixed interpolation]

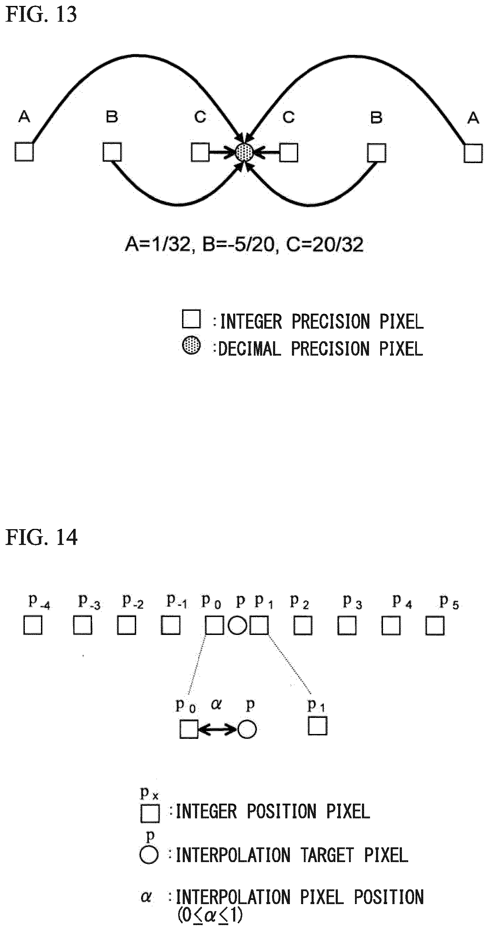

FIG. 13 is a diagram illustrating a pixel interpolation method of decimal precision in H.264/AVC. In H.264/AVC, interpolation is performed using a total of six integer pixels at three left points and three right points with respect to a target interpolation pixel at the time of interpolation of a 1/2 pixel position, as illustrated in FIG. 13. For a vertical direction, interpolation is performed using a total of six integer pixels at three upper points and three lower points. Filter coefficients are [(1, -5, 20, 20, -5, 1)/32]. After 1/2 pixel positions are interpolated, a 1/4 pixel position is interpolated using an average filter of [1/2, 1/2]. Computational complexity is high because it is necessary to obtain all 1/2 pixel positions by interpolation, but high performance interpolation is possible, leading to improvement in coding efficiency. The technology of interpolation using a fixed filter described above is shown in Non-Patent Document 1 or the like.

A filter using the same coefficient values for all input pictures and all frames, like a one-dimensional 6-tap filter of H.264/AVC, is called a fixed interpolation filter.

As a scheme of further enhancing performance of an interpolation filter adopted in H.264/AVC, a DCT-based interpolation filter (DCT-IF) is adopted in the reference software HM for HEVC. A pixel interpolation method of decimal precision in this DCT-based interpolation filter is illustrated in FIG. 14. As shown in FIG. 14, a target interpolation pixel at a decimal-precision position is denoted as p, an integer position pixel is denoted as $p_x$, and an inter-integer position pixel parameter indicating a position of p is denoted as $\alpha$ ($0 \leq \alpha \leq 1$). In this case, the number of pixels at integer positions used for interpolation, i.e., a tap length is denoted as 2M (M is an integer value greater than or equal to 1). Equation (1) is established from a definition equation for a DCT transform.

[Equation 1]

$$C_k = \frac{1}{M} \sum_{l=-M+1}^{M} p(l) \cos\left(\frac{(2l - 1 + 2M)k\pi}{4M}\right) \qquad (1)$$

Furthermore, Equation (2) is established from a definition equation for an inverse DCT transform.
[Equation 2]

$$p(x) = \frac{C_0}{2} + \sum_{k=1}^{2M-1} C_k \cos\left(\frac{\pi(2x - 1 + 2M)k}{4M}\right) \qquad (2)$$

A pixel interpolation equation at a decimal position $\alpha$ is represented as Equation (3) below by regarding x as a position.
[Equation 3]

$$p(\alpha) = \frac{C_0}{2} + \sum_{k=1}^{2M-1} C_k \cos\left(\frac{\pi(2\alpha - 1 + 2M)k}{4M}\right) \qquad (3)$$

From Equation (3), once the tap length 2M and the target interpolation position $\alpha$ used for interpolation are determined, the coefficients can be uniquely derived. Examples of interpolation filters obtained from the above-described discussion are summarized in Tables 1 and 2. The details of the above are shown in Non-Patent Document 2.

[Table 1]

| Decimal Position $\alpha$ | Filter Coefficient Values (6-Tap Filter, 2M = 6) |
|---|---|
| -1/12 | {-4, 19, 254, -19, 8, -2} |
| 1/12 | {4, -16, 252, 22, -8, 2} |
| 1/6 | {6, -28, 242, 48, -17, 5} |
| 1/4 | {9, -37, 227, 75, -25, 7} |
| 2/6 | {11, -42, 208, 103, -33, 9} |
| 5/12 | {12, -44, 184, 132, -39, 11} |
| 1/2 | {11, -43, 160, 160, -43, 11} |
| 7/12 | {11,-39, 132, 184, -44, 12} |
| 2/3 | {9, -33, 103,208, -42, 11} |
| 3/4 | {7, -25, 75, 227, -37, 9} |
| 5/6 | {5, -17, 48, 242, -28, 6} |

[Table 2]

| Decimal Position $\alpha$ | Filter Coefficient Values (12-Tap Filter, 2M = 12) |
|---|---|
| -1/12 | {1, -3, 5, -10, 22, 253, -19, 10, -6, 4, -2, 1} |
| 1/12 | {-1, 3, -5, 9, -19, 253, 23, -10, 6, -4, 2, -1} |
| 1/6 | {-2, 5, -9, 16, -34, 244, 49, -21, 12, -7, 4, -1} |
| 1/4 | {-1, 6, -12, 21, -43, 229, 75, -30, 17, -10, 5, -1} |
| 2/6 | {-3, 8, -15, 26, -50, 211, 105, -40, 22, -13, 7, -2} |
| 5/12 | {-3, 9, -16, 28, -53, 188, 134, -47, 26, -15, 8, -3} |

(continued)

| Decimal Position $\alpha$ | Filter Coefficient Values (12-Tap Filter, 2M = 12) |
|---|---|
| 1/2 | {-2, 7, -15, 28, -52, 162, 162, -52, 28, -15, 7, -2} |
| 7/12 | {-3, 8, -15, 26, -47, 134, 188, -53, 28, -16, 9, -3} |
| 2/3 | {-2, 7, -13, 22, -40, 105, 211, -50, 26, -15, 8, -3} |
| 3/4 | {-1, 5, -10, 17, -30, 75, 229, -43, 21, -12, 6, -1} |
| 5/6 | {-1, 4, -7, 12, -21, 49, 244, -34, 16, -9, 5, -2} |

Since this DCT-based interpolation filter is a high-performance interpolation filter which can support any filter length and any interpolation precision, the DCT-based interpolation filter is adopted in the test model HM for HEVC.

[Adaptive interpolation]

In H.264/AVC and the DCT-based interpolation filter, the values of filter coefficients are constant regardless of input picture conditions (sequence type/picture size/frame rate) and coding conditions (block size/GOP (Group of pictures) structure/QP (Quantization Parameter)). When the values of filter coefficients are fixed, for example, effects varying with time such as aliasing, a quantization error, an error resulting from motion estimation, and camera noise are not considered. Therefore, improvement in performance is considered to be limited in terms of coding efficiency. Accordingly, a scheme of adaptively changing interpolation filter coefficients is proposed in Non-Patent Document 3, and a one-dimensional 6-tap interpolation filter called a separable adaptive interpolation filter (SAIF) is used.

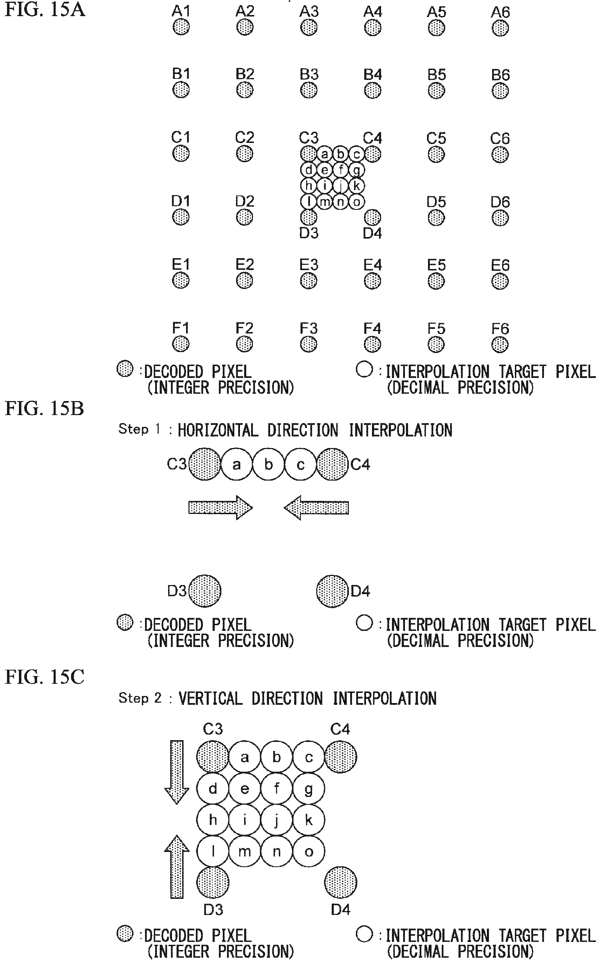

FIGS. 15A to 15C are diagrams illustrating a pixel interpolation method of decimal precision in a separable adaptive interpolation filter (SAIF). For a procedure, first, pixels (a, b, and c) in a horizontal direction are interpolated, as illustrated in step 1 of FIG. 15B. Integer-precision pixels C1 to C6 are used for determination of filter coefficients. Filter coefficients in a horizontal direction which minimize a prediction error energy function $E_h^2$ of Equation (4) are analytically determined by a generally known least-square method (see Non-Patent Document 3).

[Equation 4]

$$E_h{}^2 = \sum_{x,y}\left(S_{x,y} - \sum_{c_i} w_{c_i} \cdot P_{\tilde{x}+c_i,\tilde{y}}\right)^2 \qquad (4)$$

Here, S denotes an original picture, P denotes a decoded reference picture, and x and y denote positions in horizontal and vertical directions in the picture, respectively. Furthermore, ~x (~ is a symbol appearing above x; the same applies hereinafter) satisfies ~x = x + MV$_x$ - FilterOffset, where MV$_x$ denotes a horizontal component of a motion vector obtained in advance, and FilterOffset denotes an offset for adjustment (the value obtained by dividing a filter length in a horizontal direction by 2). For a vertical direction, ~y = y + MV$_y$ is satisfied, where MV$_y$ denotes a vertical component of the motion vector. w$_{ci}$ denotes a filter coefficient group c$_i$ ($0 \le c_i < 6$) in a horizontal direction to be obtained.

As many linear equations as the filter coefficients determined using Equation (4) are obtained and a minimization process is independently performed at each decimal-precision pixel position in a horizontal direction. Three types of 6-tap filter coefficient groups are obtained through this minimization process, and the decimal-precision pixels a, b and c are interpolated using the filter coefficient groups.

An interpolation process in a vertical direction is executed as shown in step 2 of FIG. 15C after the pixel interpolation in a horizontal direction is completed. Filter coefficients in a vertical direction are determined by solving a linear problem similar to that in a horizontal direction. Specifically, filter coefficients in a vertical direction which minimize a prediction error energy function $E_v^2$ of Equation (5) are analytically determined.

[Equation 5]

$$E_v{}^2 = \sum_{x,y}\left(S_{x,y} - \sum_{c_j} w_{c_j} \cdot \hat{P}_{\tilde{x},\tilde{y}+c_j}\right)^2 \qquad (5)$$

Here, S denotes an original picture, ^P (^ is a symbol appearing above P) denotes a picture subjected to an interpolation process in a horizontal direction after decoding, and x and y denote positions in horizontal and vertical directions in the picture, respectively. Furthermore, ~x is represented as $4 \cdot (x + MV_x)$, where $MV_x$ denotes a horizontal component of a rounded motion vector. For a vertical direction, ~y is represented as $y + MV_y$ - FilterOffset, where $MV_y$ denotes a vertical component of the motion vector, and FilterOffset denotes an offset for adjustment (the value obtained by dividing a filter length by 2). $w_{cj}$ denotes a filter coefficient group $c_j$ ($0 \leq c_j < 6$) in a vertical direction to be obtained.

A minimization process is independently performed on each decimal-precision pixel and 12 types of 6-tap filter coefficients are obtained. Using these filter coefficients, the remaining decimal-precision pixels are interpolated.

From the above, it is necessary to encode a total of 90 ($=6 \times 15$) filter coefficients and transmit them to a decoding end. In particular, for low resolution coding, this overhead increases, and therefore the number of filter coefficients to be transmitted is reduced using symmetry of the filter. For example, in FIG. 15A, positions of b, h, i, j, and k are located in centers when viewed from respective integer-precision pixels along an interpolation direction, and for a horizontal direction, coefficients used for three left points can be applied to three right points by inverting the coefficients used for the three left points. Similarly, for a vertical direction, coefficients used for three upper points can be applied to three lower points by inverting the coefficients used for the three upper points ($c_1=c_6$, $c_2=c_5$, and $c_3=c_4$).

Furthermore, since a relationship between d and 1 is symmetrical across h, filter coefficients can be used by inverting the filter coefficients. In other words, by transmitting six coefficients of d, their values may also be applied to 1. $c(d)_1=c(l)_6$, $c(d)_2=c(l)_5$, $c(d)_3=c(l)_4$, $c(d)_4=c(l)_3$, $c(d)_5=c(l)_2$, and $c(d)_6=c(l)_1$ are satisfied. This symmetry is available for e and m, f and n, and g and o. The same theory is also established for a and c, but a and c are separately transmitted without using the symmetry because a result of a horizontal direction has an influence on the interpolation in a vertical direction. As a result of using the above-described symmetry, the number of filter coefficients to be transmitted for each frame is 51 (15 in a horizontal direction and 36 in a vertical direction).

It is to be noted that, for the filter coefficients to be transmitted, difference values between the calculated filter coefficients and the fixed interpolation filter coefficients used for coefficient calculation are obtained, and residual filter coefficients are actually encoded.

Prior Art Documents

Non-Patent Documents

Non-Patent Document 1: Sakae Okubo, Shinya Kadono, Yoshihiro Kikuchi, and Teruhiko Suzuki: "H.264/AVC Textbook 3rd Revised Edition," Impress R&D, pp. 119-123, 2009

Non-Patent Document 2: Ken McCann, Woo-Jin Han, Il-Koo Kim, Jung-Hye Min, Elena Alshina, Alexander Alshin, Tammy Lee, Jianle Chen, Vadim Seregin, Sunil Lee, Yoon-Mi Hong, Min-Su Cheon, and Nikolay Shlyakhov, "Samsung's Response to the Call for Proposals on Video Compression Technology," JCTVC-A124 r2, pp. 12-14, 1st JCT-VC Meeting, Dresden, Apr. 2010

Non-Patent Document 3: S. Wittmann and T. Wedi: "Separable adaptive interpolation filter for video coding," Proc. ICIP2008, IEEE International Conference on Image Processing, pp. 2500-2503, San Diego, California, USA, Oct. 2008

Non-patent Document 4: LAI P ET AL : "Loop filter with directional similarity mapping (DSM) ", 95. MPEG MEETING ; 24-1-2011-28-1-2011 ; DAEGU ; (MOTION PICTURE EXPERT GROUP OR ISO/IEC JTC1/SC29/WG11), n° m 18981, 25 January 2011 (2001-01-25), XP 030047550This document discloses an adaptive loop filtering design which combines linear spatial filter and directional similarity filter with mapping function.

Patents documents

a

Patent Document 1: US 2010 / 28 4461 A1 (ANDERSON KENNETH [SE] ET AL) 11 November 2010 (2010-11-11); This document discloses a method of encoding a plurality of adaptive filter coefficients into a bitstream.

Patent Document 2: US 2009 / 022220 A1 (VATIS YURI [DE] ET AL) 22 January 2009 (2009-01-22); This document discloses a method and apparatus for enhanced video coding.

SUMMARY OF INVENTION

The invention concerns a video encoding method using motion compensation according to claim 1. The invention also concerns a video encoding apparatus using motion compensation according to claim 2.

Problems to be solved by the Invention

When a tap length of an interpolation filter is to be increased and interpolation filter coefficients are to be strictly transmitted without using symmetry, residual energy is inclined to be reduced, but a bit amount of the interpolation filter coefficients, which becomes an overhead, is correspondingly increased. Reduction in the bit amount related to the interpolation filter coefficients can contribute to further improvement in coding efficiency.

However, in Non-Patent Document 3, entropy encoding is performed when encoding interpolation filter coefficients, but improvement in performance is considered to be limited because parameters for the entropy encoding are fixed and all filter coefficients at all interpolation positions are encoded under the same condition.

The present invention has been made in view of the aforementioned circumstances, and an object thereof is to reduce a generated bit amount of filter coefficients of an adaptive interpolation filter and establish a highly efficient adaptive interpolation filtering method by paying attention to positions of interpolation filter coefficients in the adaptive interpolation filter and introducing an adaptive entropy encoding method.

Means for Solving the Problems

As a method for achieving the above object, the present invention is a video encoding method as defined in claim 1.

Operation of the present invention is as follows. In encoding interpolation filter coefficients in a conventional adaptive interpolation filter, a parameter used for entropy encoding is fixed, and all interpolation filter coefficients are encoded under the same condition, limiting enhancement in performance. In contrast, in the present invention, it is possible to adaptively select a parameter for reducing a generated bit amount of the interpolation filter coefficients and enhance coding efficiency.

Furthermore, in the present invention, on the assumption that the amplitude of a calculated interpolation filter coefficient, i.e., a coefficient value of the interpolation filter coefficient, increases as the position of the coefficient is closer to an interpolation target pixel and it decreases as the position of the coefficient is farther from the interpolation target pixel, the range of parameters used for entropy encoding is limited in accordance with the position of the coefficient. Accordingly, it is possible to reduce the generated bit amount of the interpolation filter coefficients using a parameter suitable for each interpolation position and enhance coding efficiency.

It is to be noted that encoding/decoding of a set of the interpolation filter coefficients and the entropy encoding parameter is performed, for example, on a frame-by-frame basis, on a slice-by-slice basis, or in units of areas each including a plurality of blocks defined by any other criterion.

Advantageous Effects of the Invention

With the present invention, an adaptive coding process for interpolation filter coefficients in accordance with a tap length and the positions of interpolation filter coefficients used for an interpolation process, which cannot be considered in conventional interpolation filters, becomes possible, and enhancement in coding efficiency can be achieved by reduction in the bit amount of the interpolation filter coefficients.

BRIEF DESCRIPTION OF DRAWINGS

FIG. 1 is a diagram illustrating a configuration example of a video encoding apparatus to which the present invention is applied.

FIG. 2 is a diagram illustrating a configuration example of an inter-prediction processing unit in the video encoding apparatus.

FIG. 3 is a flowchart of an inter-prediction encoding process.

FIG. 4A is a diagram illustrating a configuration example of an interpolation filter coefficient encoding processing unit in accordance with an embodiment of the present invention.

FIG. 4B is a diagram illustrating a configuration example of an interpolation filter coefficient encoding processing unit in accordance with a conventional method.

FIG. 5 is a flowchart of an interpolation filter coefficient encoding process.

FIG. 6 is a diagram illustrating a configuration example of a video decoding apparatus.

FIG. 7 is a diagram illustrating a configuration example of an inter-prediction processing unit in the video decoding apparatus.

FIG. 8 is a flowchart of an inter-prediction decoding process.

FIG. 9A is a diagram illustrating a configuration example of an interpolation filter coefficient decoding processing unit.

FIG. 9B is a diagram illustrating a configuration example of an interpolation filter coefficient decoding processing unit in accordance with a conventional method.

FIG. 10 is a flowchart of an interpolation filter coefficient decoding process.

FIG. 11 is a diagram illustrating a configuration example of a system when a video encoding apparatus is realized using a computer and a software program.

FIG. 12 is a diagram illustrating a configuration example of a system when a video decoding apparatus is realized using a computer and a software program.

FIG. 13 is a diagram illustrating a pixel interpolation method of decimal precision of a video coding standard scheme (H.264/AVC).

FIG. 14 is a diagram illustrating a pixel interpolation method of decimal precision of a DCT-based interpolation filter (DCT-IF).

FIG. 15A is a diagram illustrating an interpolation method of a decimal-precision pixel in a separable adaptive interpolation filter (SAIF).

FIG. 15B is a diagram illustrating an interpolation method of a decimal-precision pixel in a separable adaptive interpolation filter (SAIF).

FIG. 15C is a diagram illustrating an interpolation method of a decimal-precision pixel in a separable adaptive interpolation filter (SAIF).

## MODES FOR CARRYING OUT THE INVENTION

Hereinafter, an embodiment of the present invention will be described with reference to the drawings.

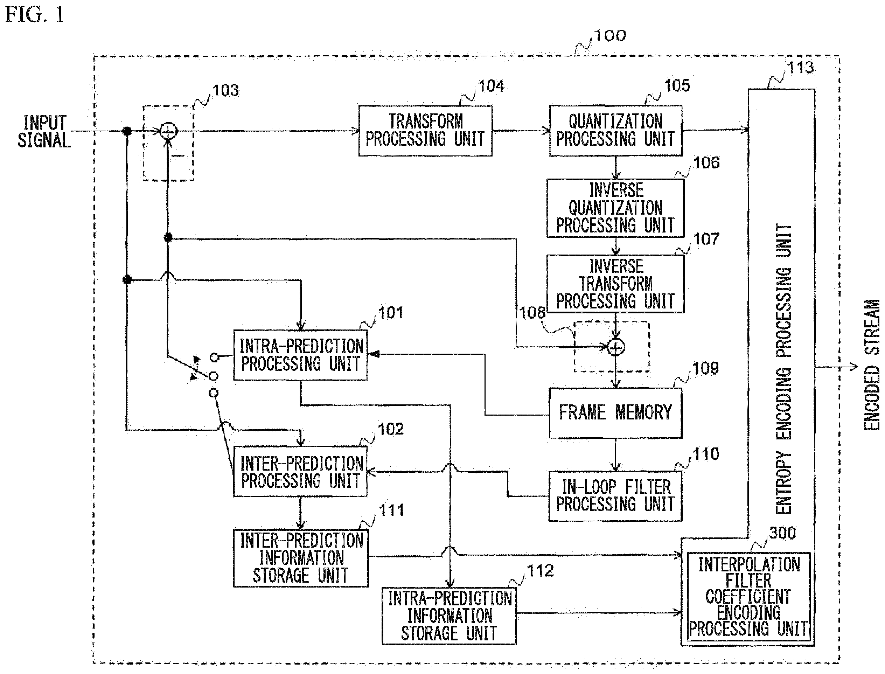

The present invention is technology related to an inter-prediction process and encoding of additional information thereof in a video encoding apparatus (FIG. 1). Hereinafter, the inter-prediction process in the video encoding apparatus will first be described.

<Configuration example of video encoding apparatus>

FIG. 1 is a diagram illustrating a configuration example of a video encoding apparatus to which the present invention is applied. In a video encoding apparatus 100 of the present embodiment, an interpolation filter coefficient encoding processing unit 300 which encodes interpolation filter coefficients used in an inter-prediction processing unit 102 is particularly different from a conventional art, and the other portions are similar to a configuration of a conventional general video encoding apparatus used as an encoder of H.264/AVC or the like.

The video encoding apparatus 100 receives an encoding target video signal, divides frames of the input video signal into blocks, encodes each block, and outputs a resultant bit stream as an encoded stream. For this encoding, a prediction residual signal generation unit 103 obtains the difference between the input video signal and a prediction signal which is an output of an intra-prediction processing unit 101 or the inter-prediction processing unit 102 and outputs the difference as a prediction residual signal. A transform processing unit 104 performs an orthogonal transform such as a discrete cosine transform (DCT) on the prediction residual signal and outputs transform coefficients. A quantization processing unit 105 quantizes the transform coefficients and outputs quantized transform coefficients. An entropy encoding processing unit 113 performs entropy encoding on the quantized transform coefficients and outputs them as the encoded stream.

On the other hand, the quantized transform coefficients are also input to an inverse quantization processing unit 106 and subjected to inverse quantization therein. An inverse transform processing unit 107 performs an inverse orthogonal transform on transform coefficients that are an output of the inverse quantization processing unit 106 and outputs a decoded prediction residual signal.

A decoded signal generation unit 108 adds the decoded prediction residual signal to the prediction signal, which is the output of the intra-prediction processing unit 101 or the inter-prediction processing unit 102, to generate a decoded signal of an encoding target block which has been encoded. This decoded signal is stored in a frame memory 109 to be used as a reference picture in the intra-prediction processing unit 101 or the inter-prediction processing unit 102. It is to be noted that when the inter-prediction processing unit 102 refers to a reference picture, an in-loop filter processing unit 110 receives a picture stored in the frame memory 109 and performs a filtering process to reduce coding distortion, and a picture subjected to this filtering process is used as the reference picture.

Information such as a prediction mode set in the intra-prediction processing unit 101 is stored in an intra-prediction information storage unit 112, entropy-encoded by the entropy encoding processing unit 113, and output as the encoded stream. Information such as a motion vector set in the inter-prediction processing unit 102 is stored in an inter-prediction information storage unit 111, entropy-encoded by the entropy encoding processing unit 113, and output as the encoded stream. In particular, the interpolation filter coefficient encoding processing unit 300 in the entropy encoding processing unit 113 performs encoding on the interpolation filter coefficients used in the inter-prediction processing unit 102.

[Configuration example of inter-prediction processing unit in video encoding]

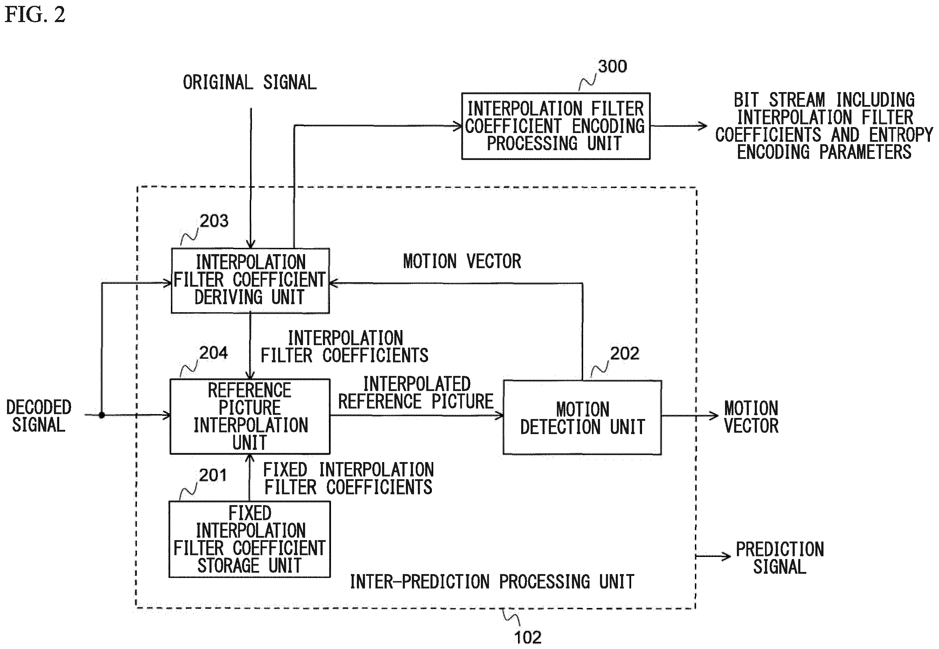

FIG. 2 illustrates a configuration example of the inter-prediction processing unit 102 illustrated in FIG. 1.

The inter-prediction processing unit 102 includes a fixed interpolation filter coefficient storage unit 201, a motion detection unit 202, an interpolation filter coefficient deriving unit 203, and a reference picture interpolation unit 204, receives an original signal and a decoded signal and outputs a prediction signal and a motion vector resulting from inter-prediction.

The fixed interpolation filter coefficient storage unit 201 stores initial fixed interpolation filter coefficients for generating a motion vector necessary to obtain interpolation filter coefficients. The stored coefficients may be, for example, coefficients of a 6-tap filter of H.264/AVC or may be coefficients of a 4-, 8- or 12-tap filter of the DCT-based interpolation filter.

The motion detection unit 202 receives an interpolated reference signal and the original picture, detects a motion vector, and outputs its information. The interpolation filter coefficient deriving unit 203 receives the original signal, the decoded signal, and the motion vector derived using the fixed interpolation filter coefficients of the fixed interpolation filter coefficient storage unit 201 and generates interpolation filter coefficients with which square error energy is minimized.

The reference picture interpolation unit 204 generates a signal of the interpolated reference picture having high resolution using the fixed interpolation filter coefficients or adaptively obtained adaptive interpolation filter coefficients, and the decoded signal.

The interpolation filter coefficient encoding processing unit 300 is a portion related to improvement of the present invention, receives the interpolation filter coefficients obtained by the interpolation filter coefficient deriving unit 203, and encodes the interpolation filter coefficients. The interpolation filter coefficient encoding processing unit 300 also encodes additional information such as an entropy encoding parameter necessary for encoding.

[Flow of inter-prediction encoding process]

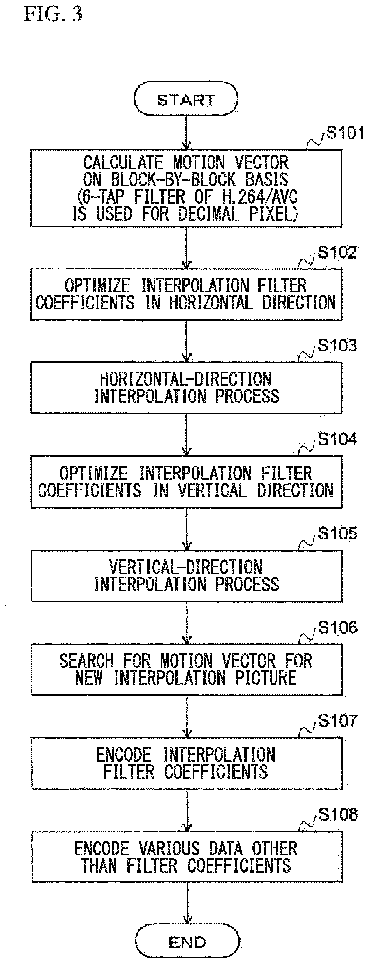

FIG. 3 is a flowchart of an inter-prediction encoding process. Hereinafter, details of the inter-prediction encoding process will be described with reference to FIG. 3.

First, in step S101, a frame is divided into blocks (e.g., a block size of conventional motion prediction such as $16 \times 16$ or $8 \times 8$) and an optimal motion vector is calculated on a block-by block basis. For example, a conventional fixed 6-tap filter based on H.264 is used for interpolation of a decimal-precision pixel of a reference picture in this step.

Next, in step S102, an optimization process of the interpolation filter coefficients for each decimal-precision pixel in a horizontal direction is performed using Equation (6) which is a prediction error energy function in a horizontal direction.

[Equation 6]

$$E_h{}^2 = \sum_{x,y}\left(S_{x,y} - \sum_{c_i} w_{c_i} \cdot P_{\tilde{x}+c_i,\tilde{y}}\right)^2 \qquad (6)$$

Here, S denotes an original picture, P denotes a decoded reference picture, and x and y denote positions in horizontal and vertical directions in the picture, respectively. Furthermore, $\sim$x is represented as $\sim$x = x + MV$_x$ - FilterOffset, where MV$_x$ denotes a horizontal component of a motion vector obtained in advance, and FilterOffset denotes an offset for adjustment (a value obtained by dividing a filter length in a horizontal direction by 2). For a vertical direction, $\sim$y = y + MV$_y$ is satisfied, where MV$_y$ denotes a vertical component of the motion vector. $w_{c_i}$ denotes a filter coefficient group $c_i$ ($0 \leq c_i < 6$) in a horizontal direction to be obtained.

In step S103, interpolation of decimal-precision pixels in a horizontal direction (interpolation of a, b, and c in FIG. 15B) is performed using the interpolation filter coefficients in a horizontal direction obtained in step S102.

In step S104, an optimization process of the interpolation filter coefficients for each decimal-precision pixel in a vertical direction is performed using Equation (7) which is a prediction error energy function in a vertical direction.

[Equation 7]

$$E_v{}^2 = \sum_{x,y}\left(S_{x,y} - \sum_{c_j} w_{c_j} \cdot \hat{P}_{\tilde{x},\tilde{y}+c_j}\right)^2 \qquad (7)$$

Here, S denotes an original picture, ^P denotes a picture subjected to the interpolation process in a horizontal direction after decoding, and x and y denote positions in horizontal and vertical directions in the picture, respectively. Furthermore, ~x is represented as $4\cdot(x + MV_x)$, where $MV_x$ denotes a horizontal component of a rounded motion vector. For a vertical direction, ~y is represented as $y + MV_y$ - FilterOffset, where $MV_y$ denotes a vertical component of the motion vector, and FilterOffset denotes an offset for adjustment (a value obtained by dividing a filter length by 2). $w_{c_j}$ denotes a filter coefficient group $c_j$ ($0 \le c_j < 6$) in a vertical direction to be obtained.

In step S105, interpolation of decimal-precision pixels in a vertical direction (interpolation of d to o in FIG. 15C) is performed using the interpolation filter coefficients in a vertical direction obtained in step S104.

In step S106, a motion vector is searched for again using the picture interpolated in a vertical direction which has been obtained in step S105 as a reference picture to calculate the motion vector.

In step S107, various interpolation filter coefficient groups are encoded.

In step S108, encoding of the remaining information (a motion vector, quantized DCT coefficients, and the like) is performed.

[Configuration example of interpolation filter coefficient encoding processing unit in accordance with embodiment of present invention]

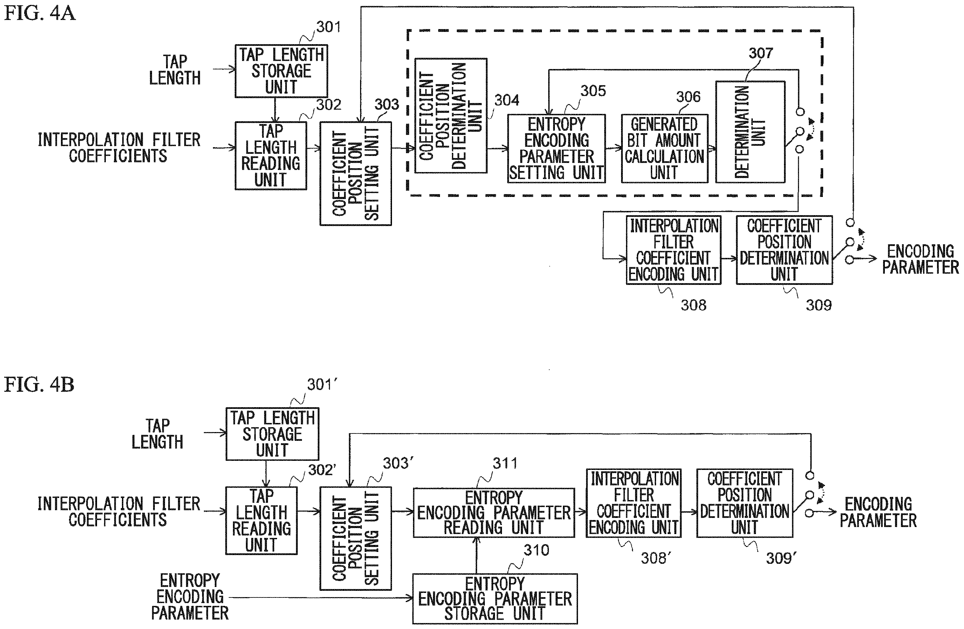

FIG. 4A illustrates a configuration example of the interpolation filter coefficient encoding processing unit (the interpolation filter coefficient encoding processing unit 300 of FIG. 1) in accordance with an embodiment of the present invention.

A tap length storage unit 301 stores a tap length of a filter used for interpolation. A tap length reading unit 302 receives interpolation filter coefficients and reads the tap length stored in the tap length storage unit 301. A coefficient position setting unit 303 receives the interpolation filter coefficients and the tap length read by the tap length reading unit 302, identifies coefficient position information used for encoding of the interpolation filter coefficients, and outputs the coefficient position information.

A coefficient position determination unit 304 receives the coefficient position information, designates a range of entropy encoding parameters to be assigned by an entropy encoding parameter setting unit 305 and an offset for adjustment in accordance with the coefficient position information and outputs the encoding parameter. In this case, when a predetermined offset is to be given for a specific coefficient position, the offset is given thereto. For presence or absence of the offset, whether or not the offset is to be given may be set in common in the encoding apparatus and the decoding apparatus. The offset may be encoded and transmitted.

Here, the following method is used as a method for limiting a range of entropy encoding parameters in accordance with the coefficient position. For example, when Golomb encoding is used as entropy encoding, a designated range of m values which are parameters for determining its code table is changed for each coefficient position. Specifically, designation of the range of the entropy encoding parameters is performed such that a narrow range is designated for a portion close to an end portion of the interpolation filter coefficients, and a wide range is designated for a portion close to a center of the interpolation filter coefficients; when the coefficient position of an interpolation filter coefficient is farthest from the position of an interpolation target pixel, the range of the m values is, for example, m=2 or m=3 and, for a coefficient nearest to the position of the interpolation target pixel, the range of the m values is, for example, m=2 to 8. It is to be noted that this parameter is not limited to a parameter of the Golomb encoding and may be, for example, a parameter for determining a code table in another entropy encoding method; similarly, a method for limiting the range of the parameters in accordance with the coefficient position may be used.

The entropy encoding parameter setting unit 305 receives the range of the entropy encoding parameters designated by the coefficient position determination unit 304 and designates an entropy encoding parameter within this range. For example, when the Golomb encoding is used as entropy encoding, each m value is sequentially designated in ascending order or descending order within the designated range of the m values.

A generated bit amount calculation unit 306 receives the entropy encoding parameter designated by the entropy encoding parameter setting unit 305, the position information, and the interpolation filter coefficients and calculates a generated bit amount obtained when the designated entropy encoding parameter is used.

A determination unit 307 receives the generated bit amount obtained by the generated bit amount calculation unit 306, the entropy encoding parameter, and the range of the entropy encoding parameters and outputs an encoding parameter with which the generated bit amount is minimized within the range of the entropy encoding parameters if the entropy encoding parameter designated by the entropy encoding parameter setting unit 305 is the same as the last value within the range of the entropy encoding parameters designated by the coefficient position determination unit 304. Otherwise, the determination unit 307 stores the generated bit amount and the entropy encoding parameter and instructs the entropy encoding parameter setting unit 305 to continue the process.

An interpolation filter coefficient encoding unit 308 receives the interpolation filter coefficients, the coefficient position information, and the encoding parameter, encodes the interpolation filter coefficients in accordance with the coefficient position information and the entropy encoding parameter and outputs a bit stream. A coefficient position determination unit 309 receives the coefficient position information and the encoding parameter, determines whether the coefficient position is the last position of the interpolation filter coefficients, and instructs the coefficient position setting unit 303 to continue the process if there are still coefficients to be encoded.

[Configuration example of conventional interpolation filter coefficient encoding processing unit]

For reference, a configuration example of a conventional interpolation filter coefficient encoding processing unit is illustrated in FIG. 4B, and the difference between the conventional interpolation filter coefficient encoding processing unit and the interpolation filter coefficient encoding processing unit in accordance with the present embodiment will be described.

The difference between the interpolation filter coefficient encoding processing unit in accordance with an embodiment of the present invention and the conventional interpolation filter coefficient encoding processing unit is the portion indicated by a dotted frame in FIG. 4A, and, in a conventional method, this portion includes an entropy encoding parameter storage unit 310 and an entropy encoding parameter reading unit 311.

The entropy encoding parameter storage unit 310 stores an entropy encoding parameter used for encoding of interpolation filter coefficients. A value used in common by the encoding apparatus and the decoding apparatus is input to the entropy encoding parameter storage unit 310. Here, a constant value is used regardless of the interpolation position.

The entropy encoding parameter reading unit 311 receives the interpolation filter coefficients and coefficient position information, reads the entropy encoding parameter stored in the entropy encoding parameter storage unit 310, and notifies an interpolation filter coefficient encoding unit 308' of the interpolation filter coefficients, the coefficient position information, and the encoding parameter.

In this way, in conventional entropy encoding for interpolation filter coefficients, the parameter for entropy encoding is fixed and the filter coefficients at all interpolation positions are encoded under the same condition, whereas, in the present embodiment, the parameter with which the generated bit amount of the interpolation filter coefficients is reduced is adaptively selected, and therefore coding efficiency is improved.

[Flow of interpolation filter coefficient encoding process]

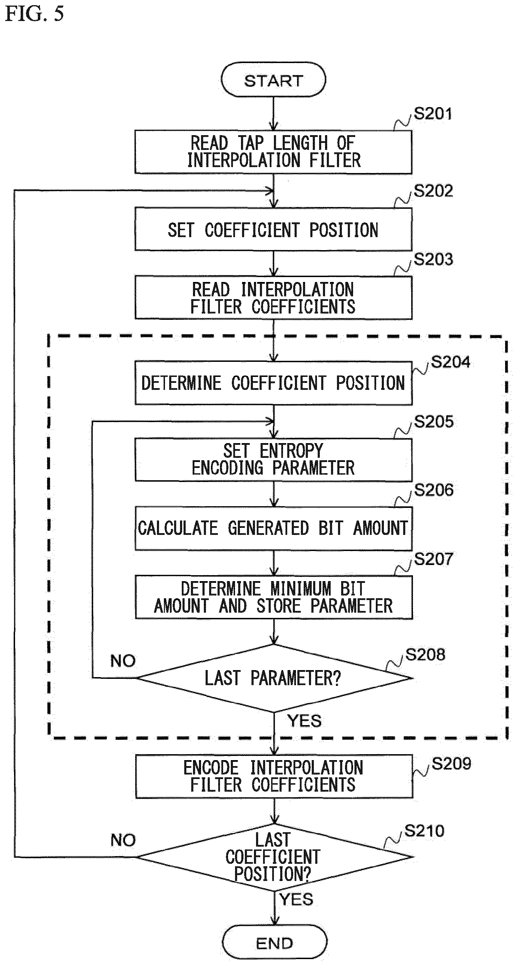

FIG. 5 illustrates a flowchart of an interpolation filter coefficient encoding process in accordance with an embodiment of the present invention. The process illustrated in FIG. 5 is executed in the process of encoding interpolation filter coefficients in step S107 of FIG. 3 described above.

First, in step S201, a tap length of an interpolation filter used for an interpolation process is read. In step S202, a position of encoding target filter coefficients is set. In step S203, an interpolation filter coefficient difference value for the position designated in step S202 is read.

The subsequent process from step S204 to step S208 is the portion different from the conventional art. In the conventional art, when the read interpolation filter coefficient difference value is encoded, a known parameter is used as an entropy encoding parameter used for the encoding. In contrast, in the present embodiment, the following process is performed.

In step S204, the position of the interpolation filter coefficients to be encoded set in step S202 is received and a determination of the position is performed. In this case, when a predetermined offset is to be given for a specific coefficient position, the offset is given thereto. For presence or absence of the offset, whether or not the offset is to be given may be set in common in the encoding apparatus and the decoding apparatus. The offset may be encoded and transmitted.

In step S205, an entropy encoding parameter used for encoding of the interpolation filter coefficients is set. This parameter refers to, for example, a parameter for determining a code table. Since a binary representation of the value of an encoding target signal changes depending on the setting of this parameter, even when the same signal value is encoded, a bit amount changes if the parameter changes.

In step S206, the interpolation filter coefficient values read in step S204 are encoded using the entropy encoding parameter set in step S205, and a generated bit amount is calculated. In this case, encoding is performed in consideration of the offset given in step S204.

In step S207, the generated bit amount obtained in step S206 is stored and a determination is made as to whether the obtained generated bit amount is a minimum generated bit amount. If the obtained generated bit amount is a minimum generated bit amount, the value of the bit amount and the parameter giving the bit amount are stored.

In step S208, a determination is made as to whether the entropy encoding parameter set in step S205 is the last parameter. If the set entropy encoding parameter is the last parameter, the calculation of the generated bit amount stops, and the parameter with which the minimum generated bit amount is realized in the generated bit amount calculation process so far is output. If the set entropy encoding parameter is not the last parameter, the process returns to step S205 to repeat the same process for a next parameter.

In step S209, encoding of the interpolation filter coefficients read in step S203 is performed. In this case, the parameter stored in step S207 with which the bit amount of the coefficients is minimized is used as the entropy encoding parameter used for the encoding.

In step S210, a determination is made as to whether the position of the coefficients to be encoded is the last position to be encoded. If the position of the coefficients to be encoded is the last position, it is determined that the last interpolation filter coefficients have been encoded, and the process ends. If the position of the coefficients to be encoded is not the last position, it is determined that there are interpolation filter coefficients to be encoded, and the process returns to step S202 to continue a process of encoding the remaining interpolation filter coefficients.

[Configuration example of video decoding apparatus]

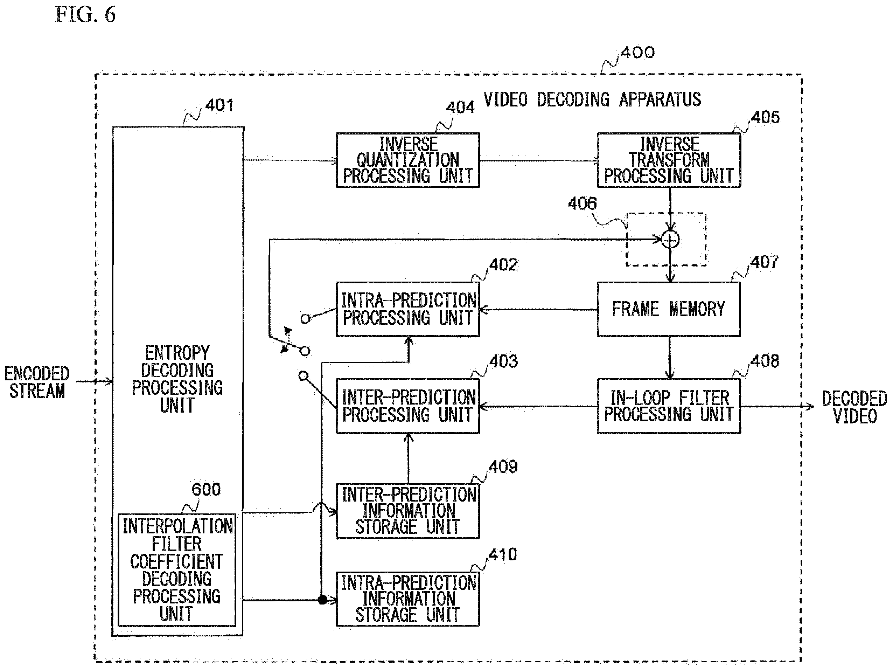

The following examples and embodiments concerning a video decoding apparatus and a video decoding method are not according to the invention and are present for illustration purposes only. FIG. 6 is a diagram illustrating a configuration example of a video decoding apparatus. In a video decoding apparatus 400 of the present embodiment, an interpolation filter coefficient decoding processing unit 600 which decodes interpolation filter coefficients to be used in an inter-prediction processing unit 403 is particularly different from the conventional art, and the other portions are similar to a configuration of a conventional general video decoding apparatus used as a decoder of H.264/AVC or the like.

The video decoding apparatus 400 receives an encoded stream which has been encoded by the video encoding apparatus 100 illustrated in FIG. 1, performs decoding thereon, and outputs decoded pictures as a video signal. For this decoding, an entropy decoding processing unit 401 receives the encoded stream and performs entropy decoding on quantized transform coefficients of a decoding target block. Furthermore, the entropy decoding processing unit 401 decodes information on intra-prediction, stores it in an intra-prediction information storage unit 410, decodes information on inter-prediction, and stores it in an inter-prediction information storage unit 409.

An inverse quantization processing unit 404 receives the quantized transform coefficients, performs inverse quantization thereon, and outputs decoded transform coefficients. An inverse transform processing unit 405 performs an inverse orthogonal transform on the decoded transform coefficients and outputs a decoded prediction residual signal. A decoded signal generation unit 406 adds this decoded prediction residual signal to a prediction signal which is an output of an intra-prediction processing unit 402 or the inter-prediction processing unit 403 to generate a decoded signal of the decoding target block. This decoded signal is stored in a frame memory 407 to be used as a reference picture in the intra-prediction processing unit 402 or the inter-prediction processing unit 403. It is to be noted that, when the inter-prediction processing unit 403 refers to a reference picture, an in-loop filter processing unit 408 receives a picture stored in the frame memory 407 and performs a filtering process to reduce coding distortion, and a picture subjected to this filtering process is used as the reference picture. Finally, the picture subjected to the filtering process is output as a video signal.

[Configuration example of inter-prediction processing unit in video decoding]

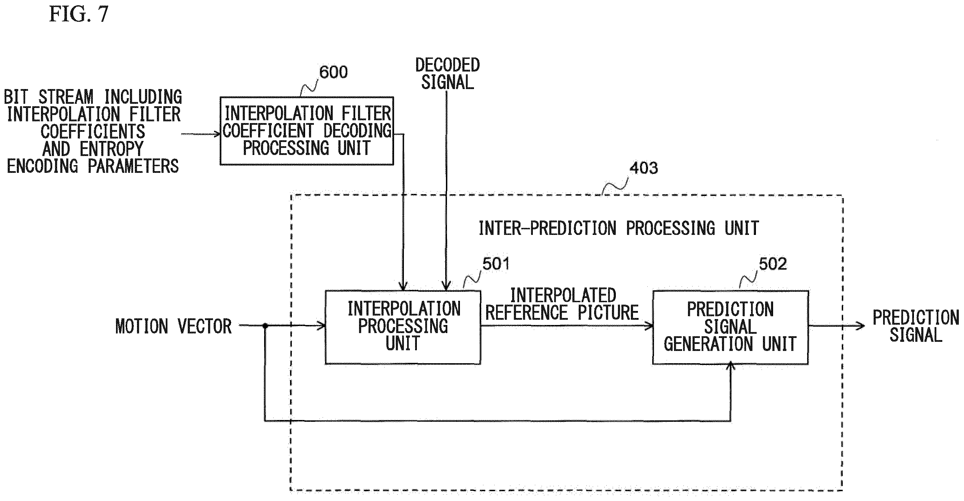

FIG. 7 illustrates a configuration example of the inter-prediction processing unit 403 illustrated in FIG. 6. The inter-prediction processing unit 403 includes an interpolation processing unit 501 and a prediction signal generation unit 502.

The interpolation filter coefficient decoding processing unit 600 receives a bit stream including information necessary for interpolation, such as interpolation filter coefficients and an entropy encoding parameter and decodes and outputs the interpolation filter coefficients.

The interpolation processing unit 501 receives the interpolation filter coefficients decoded by the interpolation filter coefficient decoding processing unit 600, a motion vector, and a decoded signal in the frame memory 407 or a decoded picture subjected to the in-loop filter processing in the in-loop filter processing unit 408, executes an interpolation process, and outputs a signal of an interpolated reference picture. The prediction signal generation unit 502 receives the interpolated reference picture generated by the interpolation processing unit 501 and the motion vector and generates and outputs a prediction signal.

EP 2 768 221 B1

[Flow of inter-prediction decoding process]

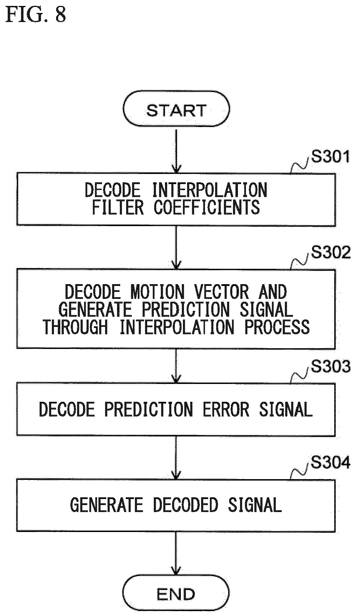

FIG. 8 is a flowchart of an inter-prediction decoding process. Hereinafter, details of the inter-prediction decoding process will be described with reference to FIG. 8.

First, in step S301, a bit stream is read, and interpolation filter coefficients are decoded. In step S302, a motion vector is decoded, an interpolation process is performed using the interpolation filter coefficients decoded in step S301, and a prediction signal is generated. In step S303, quantized DCT coefficient values are decoded from the bit stream, inverse quantization and an inverse DCT transform are performed, and a prediction error signal is acquired. In step S304, a decoded signal is generated using the prediction signal generated in step S302 and the prediction error signal decoded in step S303.

[Configuration example of interpolation filter coefficient decoding processing unit]

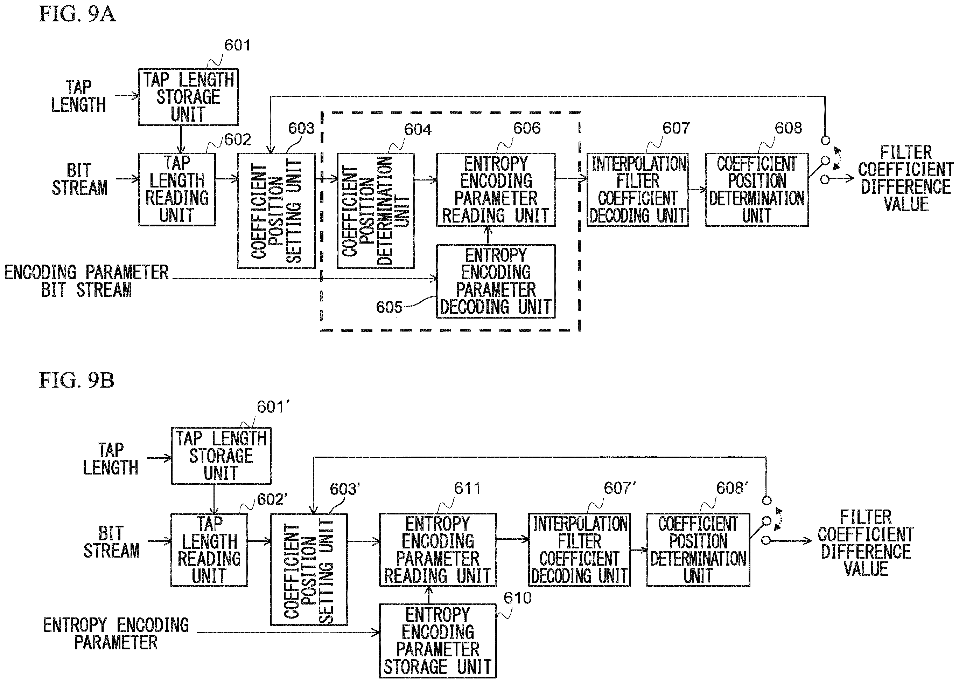

FIG. 9A illustrates a configuration example of the interpolation filter coefficient decoding processing unit (the interpolation filter coefficient decoding processing unit 600 of FIG. 6).

A tap length storage unit 601 stores a tap length of a filter used for interpolation. A tap length reading unit 602 receives a bit stream and reads the tap length stored in the tap length storage unit 601. A coefficient position setting unit 603 receives the bit stream and the tap length read by the tap length reading unit 602, identifies coefficient position information used for decoding of interpolation filter coefficients, and outputs the coefficient position information.

A coefficient position determination unit 604 receives the coefficient position information and outputs offset information for adjusting an entropy encoding parameter (e.g., a Golomb encoding parameter) obtained from an entropy encoding parameter decoding unit 605 in accordance with the coefficient position information. The entropy encoding parameter decoding unit 605 receives the bit stream including entropy encoding parameter information and decodes an entropy encoding parameter at the position designated by the coefficient position setting unit 603.

An entropy encoding parameter reading unit 606 receives the encoding parameter decoded by the entropy encoding parameter decoding unit 605 and outputs an encoding parameter to be used in a decoding process of an interpolation filter coefficient decoding unit 607 using the offset information obtained by the coefficient position determination unit 604.

The interpolation filter coefficient decoding unit 607 receives the bit stream including interpolation filter coefficient information, the coefficient position information, and the encoding parameter, decodes interpolation filter coefficients in accordance with the coefficient position information and the entropy encoding parameter, and outputs the interpolation filter coefficients.

A coefficient position determination unit 608 receives the coefficient position information designated by the coefficient position setting unit 603 and the interpolation filter coefficients decoded by the interpolation filter coefficient decoding unit 607 and outputs the interpolation filter coefficients if the coefficient position corresponds to the last coefficient position of the tap length. Otherwise, the coefficient position determination unit 608 instructs the coefficient position setting unit 603 to continue the process.

[Configuration example of conventional interpolation filter coefficient decoding processing unit]

For reference, a configuration example of a conventional interpolation filter coefficient decoding processing unit is illustrated in FIG. 9B.

The difference between the interpolation coefficient decoding processing unit in accordance with an embodiment and the conventional interpolation filter coefficient decoding processing unit is the portion indicated by a dotted frame in FIG. 9A, and in a conventional method, this portion includes an entropy encoding parameter storage unit 610 and an entropy encoding parameter reading unit 611, as illustrated in FIG. 9B.

The entropy encoding parameter storage unit 610 stores the entropy encoding parameter used for decoding of the interpolation filter coefficients. A value used in common in the encoding apparatus and the decoding apparatus is input thereto and stored therein. The entropy encoding parameter reading unit 611 receives the bit stream and the coefficient position information, reads the entropy encoding parameter stored in the entropy encoding parameter storage unit 610, and notifies an interpolation filter coefficient decoding unit 607' of the bit stream including interpolation filter coefficient information, the coefficient position information, and the encoding parameter.

In this way, in conventional entropy decoding for interpolation filter coefficients, the entropy encoding parameter is fixed, and the filter coefficients at all interpolation positions are decoded under the same condition.

[Flow of interpolation filter coefficient decoding process]

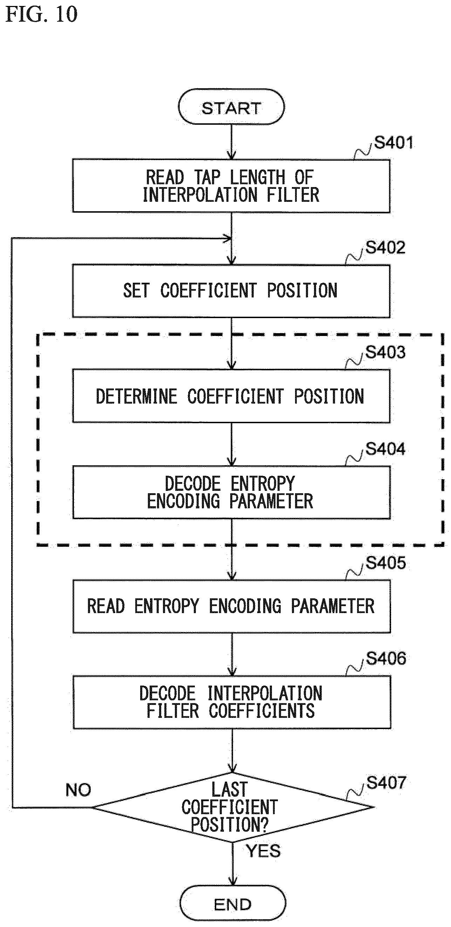

FIG. 10 illustrates a flowchart of an interpolation filter coefficient decoding process. The process illustrated in FIG. 10 is executed in the process of decoding the interpolation filter coefficients in step S301 of FIG. 8 described above.

First, in step S401, a tap length of an interpolation filter used for an interpolation process is read. When the tap length is encoded, its value is decoded and acquired. When a common value is used in the encoding apparatus and the decoding apparatus, the value is set.

In step S402, a position of decoding target filter coefficients is set. In step S403, the position of the interpolation filter coefficients to be decoded set in step S402 is received and a determination is made. In this case, when a predetermined offset is to be given for a specific coefficient position, the offset is given thereto. For presence or absence of the offset, whether or not the offset is to be given may be set in common in the encoding apparatus and the decoding apparatus. When the offset is encoded, the offset may be decoded.

In step S404, an entropy encoding parameter (e.g., a Golomb encoding parameter) at the coefficient position set in step S402 is decoded. When the offset is necessary from the position information determined in step S403, the offset is added.

In step S405, the entropy encoding parameter is read. In step S406, the interpolation filter coefficients at the coefficient position set in step S402 are decoded using the entropy encoding parameter read in step S405.

In step S407, a determination is made as to whether the position of the decoded interpolation filter coefficients is the last position to be decoded. If the position of the decoded interpolation filter coefficients is the last position, it is determined that the last interpolation filter coefficients have been decoded, the values of the interpolation filter coefficients are output, and the process ends. If the position of the decoded interpolation filter coefficients is not the last position, it is determined that there are interpolation filter coefficients to be decoded, and the process returns to step S402 to continue the process of decoding interpolation filter coefficients at the remaining positions.

The video encoding and decoding processes described above may also be realized by a computer and a software program, and this program may be recorded in a computer-readable recording medium or provided over a network.

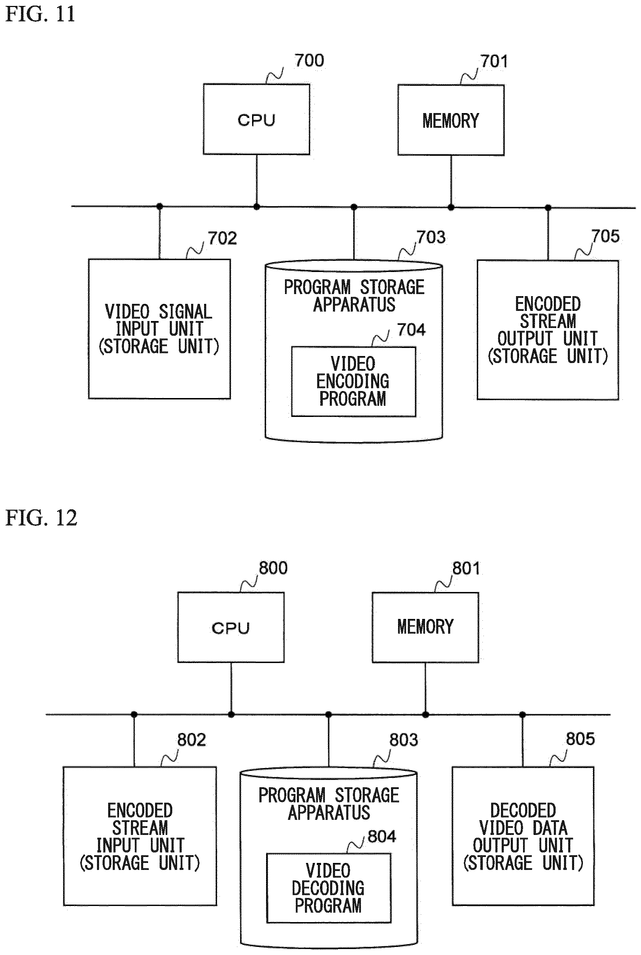

FIG. 11 illustrates a configuration example of hardware when the video encoding apparatus is configured by a computer and a software program. The present system has a configuration in which a CPU (Central Processing Unit) 700 which executes the program, a memory 701 such as a RAM (Random Access Memory) in which a program and data accessed by the CPU 700 is stored, a video signal input unit 702 (which may be a storage unit which stores a video signal using a disk apparatus or the like) which receives an encoding target video signal from a camera or the like, a program storage apparatus 703 in which a video encoding program 704 which is a software program for causing the CPU 700 to execute the encoding process described in the embodiment of the present invention is stored, and an encoded stream data output unit 705 (which may be a storage unit which stores an encoded stream using a disk apparatus or the like) which outputs an encoded stream generated by the CPU 700 executing the video encoding program 704 loaded in the memory 701, for example, via a network are connected via a bus.

FIG. 12 illustrates a configuration example of hardware when the video decoding apparatus is configured by a computer and a software program. The present system has a configuration in which a CPU 800 which executes the program, a memory 801 such as a RAM in which a program and data accessed by the CPU 800 is stored, an encoded stream input unit 802 (which may be a storage unit which stores an encoded stream using a disk apparatus or the like) which inputs the encoded stream encoded by the video encoding apparatus encoding using the present scheme, a program storage apparatus 803 in which a video decoding program 804 which is a software program for causing the CPU 800 to execute the decoding process described in the embodiment of the present invention is stored, and a decoded video data output unit 805 (which may be a storage unit which stores decoded video data using a disk apparatus or the like) which outputs decoded video obtained by performing decoding on the encoded stream by the storage unit which stores decoded video data using a disk apparatus or the like) which outputs decoded video obtained by performing decoding on the encoded stream by the CPU 800 executing the video decoding program 804 loaded in the memory 801 to a playback apparatus or the like are connected via a bus.

INDUSTRIAL APPLICABILITY

The present invention can be applied to, for example, video encoding using an interpolation filter. With the present invention, an adaptive coding process for interpolation filter coefficients in accordance with a tap length and the positions of the interpolation filter coefficients used for an interpolation process, which cannot be considered in conventional interpolation filters, becomes possible, and enhancement in coding efficiency can be achieved by reduction in the bit amount of the interpolation filter coefficients.

Description of Reference Signs

| 100 | video encoding apparatus |
|---|---|
| 102, 403 | inter-prediction processing unit |
| 300 | interpolation filter coefficient encoding processing unit |
| 301, 601 | tap length storage unit |
| 302, 602 | tap length reading unit |
| 303, 603 | coefficient position setting unit |
| 304, 604 | coefficient position determination unit |
| 305 | entropy encoding parameter setting unit |
| 306 | generated bit amount calculation unit |
| 307 | determination unit |
| 308 | interpolation filter coefficient encoding unit |
| 309, 608 | coefficient position determination unit |
| 400 | video decoding apparatus |
| 600 | interpolation filter coefficient decoding processing unit |
| 605 | entropy encoding parameter decoding unit |
| 606 | entropy encoding parameter reading unit |
| 607 | interpolation filter coefficient decoding unit |

**Claims**

1. A video encoding method using motion compensation, the video encoding method comprising:

a step (S101) of performing motion search to acquire a motion vector;
a step (S102, S104) of calculating interpolation filter coefficients used for interpolation of a decimal-precision pixel using the motion vector; and
a step (S103, S105) of performing the interpolation of the decimal-precision pixel using the interpolation filter coefficients and the motion vector,
the video encoding method **characterized by** comprising
a step (S107, S205-S209) of, for each interpolation filter coefficient, performing the following sub-steps (i)-(vi):

(i) entropy encoding the interpolation filter coefficient using designated entropy encoding parameters within a range;
(ii) calculating a bit amount generated in the entropy encoding of the interpolation filter coefficient using each entropy encoding parameter within the range;
(iii) storing the minimum bit amount among all bit amounts calculated in the entropy encoding of the interpolation filter coefficient using each entropy encoding parameter within the range;
(iv) storing the entropy encoding parameter giving the minimum bit amount;
(v) encoding and outputting the stored entropy encoding parameter; and
(vi) encoding and outputting the interpolation filter coefficient using the stored entropy encoding parameter,

wherein the range of designated entropy encoding parameters for each interpolation filter coefficient depends on the position of the interpolation filter coefficient among the interpolation filter coefficients such that a narrower range of entropy encoding parameters is designated for interpolation filter coefficient positions close to an end portion of the interpolation filter coefficients and a wider range of entropy encoding parameters is designated for interpolation filter coefficient positions closer to a center of the interpolation filter coefficients.

2. A video encoding apparatus (100) using motion compensation, the video encoding apparatus comprising:

a motion detection unit (202) which performs motion search to acquire a motion vector;
an interpolation filter coefficient deriving unit (203) which calculates interpolation filter coefficients used for interpolation of a decimal-precision pixel using the motion vector; and
an interpolation unit (204) which performs the interpolation of the decimal-precision pixel using the interpolation filter coefficients and the motion vector,
the video encoding apparatus **characterized by** comprising:

a parameter selection unit (304-307) which, for each interpolation filter coefficient, entropy encodes the interpolation filter coefficient using designated entropy encoding parameters within a range, calculates a bit amount generated in the entropy encoding of the interpolation filter coefficient using each entropy encoding parameter within the range, stores the minimum bit amount among all bit amounts calculated in the entropy encoding of the interpolation filter coefficient using each entropy encoding parameter within the range, and stores the entropy encoding parameter giving the minimum bit amount; and

an encoding processing unit (113, 300, 308) which, for each interpolation filter coefficient, encodes and outputs the stored entropy encoding parameter and encodes and outputs the interpolation filter coefficient using the stored entropy encoding parameter,

wherein the range of designated entropy encoding parameters for each interpolation filter coefficient depends on the position of the interpolation filter coefficient among the interpolation filter coefficients such that a narrower range of entropy encoding parameters is designated for interpolation filter coefficient positions close to an end portion of the interpolation filter coefficients and a wider range of entropy encoding parameters is designated for interpolation filter coefficient positions closer to a center of the interpolation filter coefficients.

3. A computer program (704) comprising instructions which, when the program is executed by a computer, causes the computer to carry out the video encoding method according to claim 1.

**Patentansprüche**

1. Ein Videokodierungsverfahren mit Bewegungskompensation, wobei das Videokodierungsverfahren folgendes umfasst:

einen Schritt (S101), bei dem eine Bewegungssuche ausgeführt wird, um einen Bewegungsvektor zu erfassen;
einen Schritt (S102, S104) zum Berechnen von Interpolationsfilterkoeffizienten, die für die Interpolation eines Dezimal-Präzisionspixels mit dem Bewegungsvektor verwendet werden; und
einen Schritt (S103, S105) der Interpolation des Dezimal-Präzisionspixels mit Hilfe der Interpolationsfilterkoeffizienten und des Bewegungsvektors,
wobei das Videokodierungsverfahren **dadurch gekennzeichnet ist, dass** es folgendes umfasst,
einen Schritt (S107, S205-S209) der Ausführung die folgenden Unterschritte (i)-(vi) für jeden Interpolationsfilterkoeffizienten:

(i) Entropiekodieren des Interpolationsfilterkoeffizienten unter Verwendung designierter Entropiekodierungsparameter innerhalb eines Bereichs;
(ii) Berechnen einer in der Entropiekodierung des Interpolationsfilterkoeffizienten erzeugten Bitmenge für jeden Entropiekodierungsparameter innerhalb des Bereichs;
(iii) Speichern der minimalen Bitmenge unter allen Bitmengen, die in der Entropiekodierung des Interpolationsfilterkoeffizienten für jeden Entropiekodierungsparameter innerhalb des Bereichs berechnet wurden;
(iv) Speichern desjenigen Entropiekodierungsparameters, welcher die minimale Bitmenge ergibt;
(v) Kodieren und Ausgeben des gespeicherten Entropiekodierungsparameters; und
(iv) Kodieren und Ausgeben desjenigen Interpolationsfilterkoeffizienten, der den gespeicherten Entropiekodierungsparameter verwendet,

wobei der Bereich der designierten Entropiekodierungsparameter für jeden Interpolationsfilterkoeffizienten von der Position des Interpolationsfilterkoeffizienten innerhalb der Interpolationsfilterkoeffizienten derart abhängt, dass ein engerer Bereich von Entropiekodierungsparametern für Interpolationsfilterkoeffizienten mit Positionen nahe einem Endbereich der Interpolationsfilterkoeffizienten und ein größerer Bereich von Entropiekodierungsparametern für Interpolationsfilterkoeffizienten mit Positionen in der Nähe einer Mitte der Interpolationsfilterkoeffizienten designiert wird.

2. Eine Videokodierungsvorrichtung (100) mit Bewegungskompensation, wobei die Videokodierungsvorrichtung folgendes umfasst:

eine Bewegungserkennungseinheit (202), die eine Bewegungssuche durchführt, um einen Bewegungsvektor zu erfassen;
eine Interpolationsfilterkoeffizienten-Herleitungseinheit (203), die Interpolationsfilterkoeffizienten berechnet, die für die Interpolation eines Dezimal-Präzisionspixels mit dem Bewegungsvektor verwendet werden; und
eine Interpolationseinheit (204), die die Interpolation des Dezimal-Präzisionspixels mit den Interpolationsfilterkoeffizienten und dem Bewegungsvektor ausführt,
wobei die Videokodierungsvorrichtung **dadurch gekennzeichnet ist, dass** diese folgendes umfasst,
eine Parameterauswahleinheit (304-307), die

die Interpolationsfilterkoeffizienten mithilfe von designierten Entropiekodierungsparametern innerhalb eines Bereichs für jeden Interpolationsfilterkoeffizienten Entropiekodiert,
für jeden Entropiekodierungsparameter innerhalb des Bereichs jeweils eine bei der in der Entropiecodierung des Interpolationsfilterkoeffizienten erzeugte Bitmenge berechnet,
die minimale Bitmenge unter allen Bitmengen speichert, die in der Entropiekodierung des Interpolationsfilterkoeffizienten für jeden Entropiekodierungsparameter innerhalb des Bereiches berechnet wurden, und denjenigen Entropiekodierungsparameter mit der minimalen Bitmenge speichert; und

eine Codierungsverarbeitungseinheit (113, 300, 308), die für jeden Interpolationsfilterkoeffizienten den gespeicherten Entropiecodierungsparameter kodiert und ausgibt und denjenigen Interpolationsfilterkoeffizienten, welcher den gespeicherten Entropiekodierungsparameter verwendet, kodiert und ausgibt,
wobei der Bereich der designierten Entropiekodierungsparameter für jeden Interpolationsfilterkoeffizienten von der Position des Interpolationsfilterkoeffizienten innerhalb der Interpolationsfilterkoeffizienten derart abhängt, dass ein engerer Bereich von Entropiekodierungsparametern für Interpolationsfilterkoeffizienten mit Positionen nahe einem Endbereich der Interpolationsfilterkoeffizienten und ein größeren Bereich von Entropiekodierungsparametern für Interpolationsfilterkoeffizienten mit Positionen in der Nähe einer Mitte der Interpolationsfilterkoeffizienten designiert wird.

3. Ein Computerprogramm (704) mit Anweisungen, die den Computer dazu bringen das Videokodierungsverfahren nach Anspruch 1 auszuführen, wenn das Programm von einem Computer ausgeführt wird.


**Revendications**

1. Procédé d'encodage vidéo à l'aide d'une compensation de mouvement, le procédé d'encodage vidéo comprenant :

une étape (S101) de réalisation de recherche de mouvement pour acquérir un vecteur de mouvement ;
une étape (S102, S104) de calcul de coefficients de filtres d'interpolation utilisés pour l'interpolation d'un pixel de précision décimale à l'aide du vecteur de mouvement ; et
une étape (S103, S105) de réalisation de l'interpolation du pixel de précision décimale à l'aide des coefficients de filtres d'interpolation et du vecteur de mouvement,
le procédé d'encodage vidéo étant **caractérisé en ce qu'**il comprend
une étape (S107, S205 à S209) de réalisation, pour chaque coefficient de filtres d'interpolation, des sous-étapes (i) à (vi) suivantes :

(i) l'encodage entropique du coefficient de filtres d'interpolation à l'aide de paramètres d'encodage entropique désignés au sein d'une plage ;
(ii) le calcul d'une quantité binaire générée dans l'encodage entropique du coefficient de filtres d'interpolation à l'aide de chaque paramètre d'encodage entropique au sein de la plage ;
(iii) le stockage de la quantité binaire minimale parmi toutes les quantités binaires calculées dans l'encodage entropique du coefficient de filtres d'interpolation à l'aide de chaque paramètre d'encodage entropique au sein de la plage ;
(iv) le stockage du paramètre d'encodage entropique donnant la quantité binaire minimale ;
(v) l'encodage et la fourniture en sortie du paramètre d'encodage entropique stocké ; et
(vi) l'encodage et la fourniture en sortie du coefficient de filtres d'interpolation à l'aide du paramètre d'encodage entropique stocké,

dans lequel la plage de paramètres d'encodage entropique désignés pour chaque coefficient de filtres d'interpolation dépend de la position du coefficient de filtres d'interpolation parmi les coefficients de filtres d'interpolation de sorte qu'une plage plus étroite de paramètres d'encodage entropique soit désignée pour des positions de coefficient de filtres d'interpolation proches d'une portion terminale des coefficients de filtres d'interpolation et qu'une plage plus large de paramètres d'encodage entropique soit désignée pour des positions de coefficient de filtres d'interpolation plus proches d'un centre des coefficients de filtres d'interpolation.

**2.** Appareil d'encodage vidéo (100) à l'aide d'une compensation de mouvement, l'appareil d'encodage vidéo comprenant :

une unité de détection de mouvement (202) qui réalise une recherche de mouvement pour acquérir un vecteur de mouvement ;
une unité de dérivée de coefficients de filtres d'interpolation (203) qui calcule des coefficients de filtres d'interpolation utilisés pour l'interpolation d'un pixel de précision décimale à l'aide du vecteur de mouvement ; et
une unité d'interpolation (204) qui réalise l'interpolation du pixel de précision décimale à l'aide des coefficients de filtres d'interpolation et du vecteur de mouvement,
l'appareil d'encodage vidéo étant **caractérisé en ce qu'**il comprend :

une unité de sélection de paramètres (304 à 307) qui, pour chaque coefficient de filtres d'interpolation, effectue un encodage entropique du coefficient de filtres d'interpolation à l'aide de paramètres d'encodage entropique désignés au sein d'une plage, calcule une quantité binaire générée dans l'encodage entropique du coefficient de filtres d'interpolation à l'aide de chaque paramètre d'encodage entropique au sein de la plage, stocke la quantité binaire minimale parmi toutes les quantités binaires calculées dans l'encodage entropique du coefficient de filtres d'interpolation à l'aide de chaque paramètre d'encodage entropique au sein de la plage, et stocke le paramètre d'encodage entropique donnant la quantité binaire minimale ; et
une unité de traitement d'encodage (113, 300, 308) qui, pour chaque coefficient de filtres d'interpolation, encode et fournit en sortie le paramètre d'encodage entropique stocké et encode et fournit en sortie le coefficient de filtres d'interpolation à l'aide du paramètre d'encodage entropique stocké,
dans lequel la plage de paramètres d'encodage entropique désignés pour chaque coefficient de filtres d'interpolation dépend de la position du coefficient de filtres d'interpolation parmi les coefficients de filtres d'interpolation de sorte qu'une plage plus étroite de paramètres d'encodage entropique soit désignée pour des positions de coefficient de filtres d'interpolation proches d'une portion terminale des coefficients de filtres d'interpolation et qu'une plage plus large de paramètres d'encodage entropique soit désignée pour des positions de coefficient de filtres d'interpolation plus proches d'un centre des coefficients de filtres d'interpolation.

**3.** Programme d'ordinateur (704) comprenant des instructions qui, lorsque le programme est exécuté par un ordinateur, amènent l'ordinateur à réaliser le procédé d'encodage vidéo selon la revendication 1.

FIG. 1

ENCODED STREAM

INPUT SIGNAL

100

103

104 TRANSFORM PROCESSING UNIT

105 QUANTIZATION PROCESSING UNIT

106 INVERSE QUANTIZATION PROCESSING UNIT

107 INVERSE TRANSFORM PROCESSING UNIT

108

109 FRAME MEMORY

110 IN-LOOP FILTER PROCESSING UNIT

101 INTRA-PREDICTION PROCESSING UNIT

102 INTER-PREDICTION PROCESSING UNIT

111 INTER-PREDICTION INFORMATION STORAGE UNIT

112 INTRA-PREDICTION INFORMATION STORAGE UNIT

113 ENTROPY ENCODING PROCESSING UNIT

300 INTERPOLATION FILTER COEFFICIENT ENCODING PROCESSING UNIT

FIG. 2

ORIGINAL SIGNAL

300
INTERPOLATION FILTER
COEFFICIENT ENCODING
PROCESSING UNIT

BIT STREAM INCLUDING
INTERPOLATION FILTER
COEFFICIENTS AND ENTROPY
ENCODING PARAMETERS

203
INTERPOLATION
FILTER COEFFICIENT
DERIVING UNIT

MOTION VECTOR

INTERPOLATION
FILTER COEFFICIENTS

204
REFERENCE
PICTURE
INTERPOLATION
UNIT

INTERPOLATED
REFERENCE PICTURE

202
MOTION
DETECTION UNIT

MOTION
VECTOR

DECODED
SIGNAL

201
FIXED
INTERPOLATION
FILTER COEFFICIENT
STORAGE UNIT

FIXED INTERPOLATION
FILTER COEFFICIENTS

INTER-PREDICTION PROCESSING UNIT

PREDICTION
SIGNAL

102

EP 2 768 221 B1

FIG. 3

START

CALCULATE MOTION VECTOR
ON BLOCK-BY-BLOCK BASIS
(6-TAP FILTER OF H.264/AVC
IS USED FOR DECIMAL PIXEL) — S101

OPTIMIZE INTERPOLATION FILTER
COEFFICIENTS IN HORIZONTAL DIRECTION — S102

HORIZONTAL-DIRECTION
INTERPOLATION PROCESS — S103

OPTIMIZE INTERPOLATION FILTER
COEFFICIENTS IN VERTICAL DIRECTION — S104

VERTICAL-DIRECTION
INTERPOLATION PROCESS — S105

SEARCH FOR MOTION VECTOR FOR
NEW INTERPOLATION PICTURE — S106

ENCODE INTERPOLATION
FILTER COEFFICIENTS — S107

ENCODE VARIOUS DATA OTHER
THAN FILTER COEFFICIENTS — S108

END

FIG. 4A

TAP LENGTH → TAP LENGTH STORAGE UNIT (301)

INTERPOLATION FILTER COEFFICIENTS → TAP LENGTH READING UNIT (302) → COEFFICIENT POSITION SETTING UNIT (303)

COEFFICIENT POSITION DETERMINATION UNIT (304) → ENTROPY ENCODING PARAMETER SETTING UNIT (305) → GENERATED BIT AMOUNT CALCULATION UNIT (306) → DETERMINATION UNIT (307)

INTERPOLATION FILTER COEFFICIENT ENCODING UNIT (308) → COEFFICIENT POSITION DETERMINATION UNIT (309) → ENCODING PARAMETER

FIG. 4B

TAP LENGTH → TAP LENGTH STORAGE UNIT (301′)

INTERPOLATION FILTER COEFFICIENTS → TAP LENGTH READING UNIT (302′) → COEFFICIENT POSITION SETTING UNIT (303′)

ENTROPY ENCODING PARAMETER → 

ENTROPY ENCODING PARAMETER READING UNIT (311) → INTERPOLATION FILTER COEFFICIENT ENCODING UNIT (308′) → COEFFICIENT POSITION DETERMINATION UNIT (309′) → ENCODING PARAMETER

ENTROPY ENCODING PARAMETER STORAGE UNIT (310)

22

FIG. 5

FIG. 6

FIG. 7

EP 2 768 221 B1

FIG. 8

```
            ┌─────────────┐
            │    START    │
            └──────┬──────┘
                   │              S301
         ┌─────────▼─────────────┐
         │  DECODE  INTERPOLATION │
         │   FILTER  COEFFICIENTS │
         └─────────┬─────────────┘
                   │              S302
         ┌─────────▼─────────────┐
         │  DECODE  MOTION VECTOR AND │
         │  GENERATE  PREDICTION SIGNAL │
         │ THROUGH  INTERPOLATION PROCESS │
         └─────────┬─────────────┘
                   │              S303
         ┌─────────▼─────────────┐
         │ DECODE  PREDICTION ERROR SIGNAL │
         └─────────┬─────────────┘
                   │              S304
         ┌─────────▼─────────────┐
         │  GENERATE  DECODED SIGNAL │
         └─────────┬─────────────┘
                   │
            ┌──────▼──────┐
            │     END     │
            └─────────────┘
```

FIG. 10

```
                    ┌─────────────┐
                    │    START    │
                    └─────────────┘
                           │
                           ▼                    S401
          ┌──────────────────────────────────┐
          │      READ TAP LENGTH OF          │
          │      INTERPOLATION FILTER        │
          └──────────────────────────────────┘
                           │
                           ▼                    S402
          ┌──────────────────────────────────┐
          │      SET COEFFICIENT POSITION    │
          └──────────────────────────────────┘
                           │
    ┌ ─ ─ ─ ─ ─ ─ ─ ─ ─ ─ ▼ ─ ─ ─ ─ ─ ─ ─ ─ S403 ┐
    │     ┌──────────────────────────────────┐   │
          │   DETERMINE COEFFICIENT POSITION │
    │     └──────────────────────────────────┘   │
                           │
    │                      ▼                 S404 │
          ┌──────────────────────────────────┐
    │     │       DECODE ENTROPY             │   │
          │     ENCODING PARAMETER           │
    │     └──────────────────────────────────┘   │
    └ ─ ─ ─ ─ ─ ─ ─ ─ ─ ─ ┼ ─ ─ ─ ─ ─ ─ ─ ─ ─ ─ ┘
                           ▼                    S405
          ┌──────────────────────────────────┐
          │  READ ENTROPY ENCODING PARAMETER │
          └──────────────────────────────────┘
                           │
                           ▼                    S406
          ┌──────────────────────────────────┐
          │      DECODE INTERPOLATION        │
          │      FILTER COEFFICIENTS         │
          └──────────────────────────────────┘
                           │
                           ▼                    S407
         NO          ╱  LAST      ╲
       ◀─────────────   COEFFICIENT
                     ╲  POSITION? ╱
                           │ YES
                           ▼
                    ┌─────────────┐
                    │     END     │
                    └─────────────┘
```

FIG. 11

700 CPU

701 MEMORY

702 VIDEO SIGNAL INPUT UNIT (STORAGE UNIT)

703 PROGRAM STORAGE APPARATUS

704 VIDEO ENCODING PROGRAM

705 ENCODED STREAM OUTPUT UNIT (STORAGE UNIT)

FIG. 12

800 CPU

801 MEMORY

802 ENCODED STREAM INPUT UNIT (STORAGE UNIT)

803 PROGRAM STORAGE APPARATUS

804 VIDEO DECODING PROGRAM

805 DECODED VIDEO DATA OUTPUT UNIT (STORAGE UNIT)

FIG. 13

A=1/32, B=-5/20, C=20/32

□ :INTEGER PRECISION PIXEL
▦ :DECIMAL PRECISION PIXEL

FIG. 14

$p_x$
□ :INTEGER POSITION PIXEL

$p$
○ :INTERPOLATION TARGET PIXEL

$\alpha$ :INTERPOLATION PIXEL POSITION
$(0 \leq \alpha \leq 1)$

30

FIG. 15A

⬡ : DECODED PIXEL
(INTEGER PRECISION)

◯ : INTERPOLATION TARGET PIXEL
(DECIMAL PRECISION)

FIG. 15B

Step 1 : HORIZONTAL DIRECTION INTERPOLATION

⬡ : DECODED PIXEL
(INTEGER PRECISION)

◯ : INTERPOLATION TARGET PIXEL
(DECIMAL PRECISION)

FIG. 15C

Step 2 : VERTICAL DIRECTION INTERPOLATION

⬡ : DECODED PIXEL
(INTEGER PRECISION)

◯ : INTERPOLATION TARGET PIXEL
(DECIMAL PRECISION)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010284461 A1
- US 2009022220 A1, VATIS YURI

**Non-patent literature cited in the description**

- H.264/AVC Textbook. **SAKAE OKUBO ; SHINYA KADONO ; YOSHIHIRO KIKUCHI ; TERUHIKO SUZUKI.** Impress R&D. 2009, 119-123
- **KEN MCCANN ; WOO-JIN HAN ; IL-KOO KIM ; JUNG-HYE MIN ; ELENA ALSHINA ; ALEXANDER ALSHIN ; TAMMY LEE ; JIANLE CHEN ; VADIM SEREGIN ; SUNIL LEE.** Samsung's Response to the Call for Proposals on Video Compression Technology. *JCTVC-A124 r2,* April 2010, 12-14
- **S. WITTMANN ; T. WEDI.** Separable adaptive interpolation filter for video coding. *Proc. ICIP2008, IEEE International Conference on Image Processing,* October 2008, 2500-2503
- **LAI P et al.** Loop filter with directional similarity mapping (DSM). *95. MPEG MEETING,* 25 January 2011